# EUROPEAN PATENT SPECIFICATION

(11) **EP 4 530 265 B1**
(45) Date of publication and mention of the grant of the patent: **25.03.2026**
(21) Application number: 23199977.2
(22) Date of filing: 27.09.2023
(51) Int. Cl.: C03B 23/045, C03B 23/09, C03B 23/18, C03B 33/06

(54) **METHOD AND APPARATUS FOR THE PRODUCTION OF GLASS TUBES WITH CLOSED ENDS**
VERFAHREN UND VORRICHTUNG ZUR HERSTELLUNG VON GLASROHREN MIT GESCHLOSSENEN ENDEN
PROCÉDÉ ET DISPOSITIF POUR LA FABRICATION DE TUBES EN VERRE À EXTRÉMITÉS FERMÉES

(43) Date of publication of application: 02.04.2025
(73) Proprietor: SCHOTT AG, 55122 Mainz (DE)
(72) Inventor: BRAUN, Patrick, 95666 Mitterteich (DE); GEIHE, Christian, 95666 Mitterteich (DE); ZEITLER, Jonas, 95666 Mitterteich (DE); HAMANN, Carsten, 95666 Mitterteich (DE)
(74) Representative: Schott Corporate IP

(56) References cited:
- EP-A1- 3 502 066
- US-A1- 2019 322 565
- US-A1- 2023 167 013

## Description

The present invention relates to a method and an apparatus for the sealing of glass tubes in a hot softened state, especially of glass tubes, which are intended for the production of primary packaging means made of glass for the storage of pharmaceutically active substances.

In the production of glass tubes usually glass tubes are severed from the glass tube line produced with for example a Vello or Danner process, which are then processed further. These glass tubes may have standard lengths of e.g., 1.5 m, but may also be severed off in other lengths in order to be processed directly to primary packaging means for the storage of pharmaceutical substances, for example, glass ampoules, glass vials, glass cartridges or glass syringes. For such applications, it is preferable that no impurities reach the interior of the glass tubes in the course of processing and handling, as these can be removed from it again only with considerable effort. Therefore, the tube ends are severed off in a hot softened state directly at the glass tubing in a special tube end processing machine and the tubes are sealed therewith to prevent a deposition of particles inside the glass tube during further processing or transport.

Glass tubes as described above are preferred for further processing like the production of primary packaging for pharmaceutical substances, as due to the closure at both ends, the glass tubes are very robust and can withstand a lot of handling abuse without breaking. This is highly desirable for transport and further processing as loss to unintended damage is highly reduced.

These glass tubes are provided with both ends closed as well as a ventilation hole made in the wall of the glass tube near one of the closed ends. The ventilation hole ensures that no problems occur due to variations in gas pressure during transport and storage.

Methods for producing closed tubes are known in the art, for example from US 9458045 or EP4023615, or from US 2019/0322565 or US 2023/0167013. Also, methods for producing glass tubes with one sealed end are known, for example, from EP3502066. However, these known methods result in closed glass tubes that from time to time exhibit internal contamination with residues, also sometimes called snowflakes, that show up immediately after production or also sometimes several days or weeks after production for example during storage or transport. This kind of contamination is detrimental to further processing of the tube and requires either rejection of the tube for further processing or additional cleaning steps. It is therefore an object of the invention to provide for a method and apparatus for the production of closed glass tubes that result in reliable contamination free closed glass tubes.

The subject-matter of the invention is defined in independent method claim 1 and in independent apparatus claim 8. Preferred embodiments of the invention are in the dependent claims.

Details of the invention will be described in the following under reference to the figures in which;
Fig. 1A-1E show schematically method steps according to the invention,
Fig. 2 shows an example of an embodiment of a gas supply, and
Fig. 3 shows a further example of an embodiment of a gas supply.

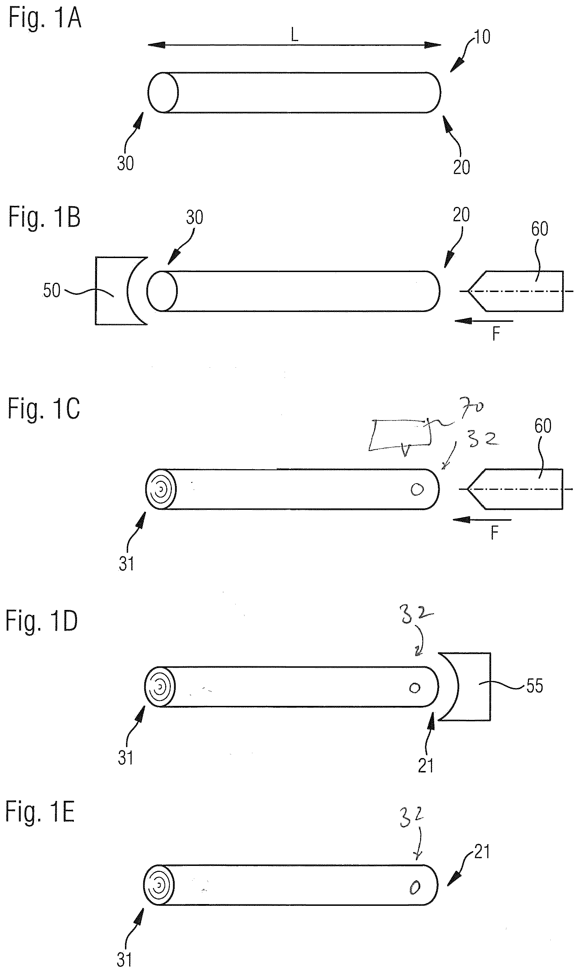

The process of manufacturing a glass tube according to a first embodiment will be shown in reference to Fig. 1 A-E. Fig. 1A shows a glass tube 10, with a length of L, having a first end 30 and a second end 20 at the distal ends of the tube 10. The glass tube 10 has a circumferential wall and encloses an inner space. In this example the length L is around 1.5 m, but other lengths are also possible. Lengths of 0.5 to 2.0 m are preferable as having the advantage of providing a useful length for transport as well as for further processing.

The goal is to close both ends 20, 30 of the tube 10 and provide a ventilation hole 32 in the wall of the glass tube 10, where the ventilation hole is in the vicinity of one of the ends 20, 30.

In a first step, shown in Fig. 1B, the first end 30 is closed using a closing tool 50. During the closing of the first end, gas F is blown into the second end 20 of the glass tube by means of a gas supply 60. The gas F is blown into the tube 10 in the direction towards the second end 20 in the axial direction of the tube 10, so that the gas F enters the inner space of the tube 10, and preferably fills the inner space of the tube 10. In a variant of this step, the start of blowing of the gas F into the second end 20 is started before the start of the closing of the first end 30. The gas supply 60 is stopped once the first end 30 is fully closed. The now closed first end is indicated as 31 in the Fig. 1B. In a variant of this step, the gas supply can be stopped just before the first end is fully closed.

In the second step, shown in Fig. 1C, the ventilation hole 32 is made into the wall of the glass tube near the second end 20 of the glass tube 10, by means of an opening tool 70. During this step the gas supply 60 can be stopped. In an alternative variant, the gas supply 60 can be kept switched on, and stopped once the ventilation hole 32 has been formed or stopped during the formation of the ventilation hole 32.

In the third step, shown in Fig. 1D, the second end 20 of the glass tube 10 is closed, also using a closing tool 55, for example of the same type as closing tool 50 used for closing the first end 30 of the glass tube. The now closed second end of the tube 10 is indicated with 21. Preferably, the third step is done within a short period of time after finishing the second step. This short period of time can for example be 5 to 15 seconds.

After the third step, the result is a glass tube 10 with both ends 21, 31 closed, with a ventilation hole 32 provided near one of the ends 21, shown in Fig. 1E. By having provided gas F into the tube 10 as described above during the closing of the first end 30, the resulting closed tube 10 does not show internal contamination, also after a longer period of storage.

Methods and devices for closing ends of glass tubes as mentioned before as the use of a closing tool to close the end of the glass tube are known in the art, for example from US 10315946. In general, the end to be closed is heated up (for example with a gas burner) so that the glass is softened, and the end is closed using either a forming tool to physically form the closure or let the now softened end fall in on itself due to gravity thereby closing off the end of the glass tube. During these kind of closing methods, the glass tubes can be rotated around their circumferential axis to improve the closing process. According to the invention any suitable closing method or device can be used.

The ventilation hole is applied by the opening tool 70, such tools are known in the art, for using a spot burner. Preferably, the burner is located above the glass tube when opening the hole, but other positions are also usable. The location of the ventilation hole is preferably near the closed end of the glass tube, as the section of the tube between the ventilation hole and the closest closed end of the glass tube can typically not be further processed.

The gas F used is preferably a non-reactive gas, that does not interfere with the closing process or interfere with the surface of the glass tube. One example is air, with a low relative humidity of 5%-20% at 20C room temperature. In absolute humidity terms, the air is preferably between 0,05 to 5 g/m3. Other examples would be nitrogen gas, carbon dioxide gas, or a mixture thereof, also with a low relative humidity (water vapor content). Other non-reactive engineering gases (like noble gasses like argon) can be used, preferably with a water content (i.e. humidity) within the range of 5%-20% at 20C room temperature. Gasses that are reactive in the sense that they bind with water can also be used, as the use of these also reduces the humidity of the gas. Blowing the gas into the glass tube during processing leads to a significant reduction or full elimination of internal contamination of the closed tube. Preferably, the gas is filtered to prevent unwanted particles to enter the glass tube to be closed. Gas filtration methods are known in the art, for example by means of a physical filter.

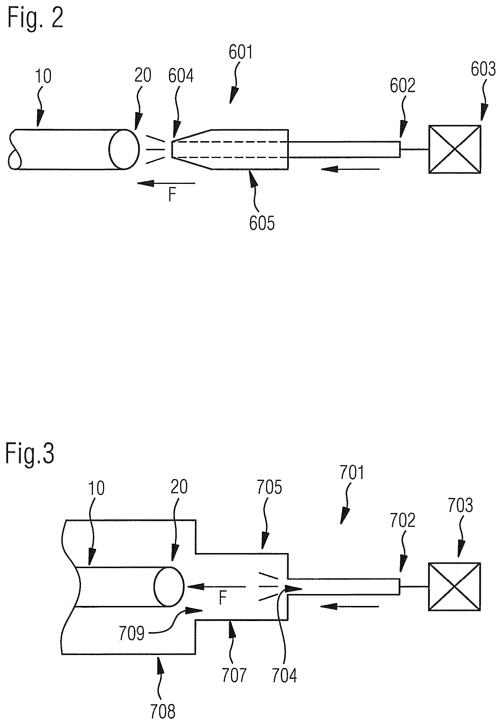

In Fig. 2 an example of an embodiment of a gas supply 601 according to the invention is shown. In this embodiment, the gas supply 601 is provided with an inlet 602 that is connected to a gas source 603, that provides the gas F under pressure. This can for example be done using a gas compressor. The gas source 603 can be provided with a gas pressure regulator that regulates the pressure of the gas to be supplied as well as an opening and closing mechanism that can open and close the gas source. Such gas sources are well known in the art. The gas source can also comprise a flow meter.

The inlet 602 is communicatively connected to an outlet 604 where the gas F leaves the gas supply 601 to enter the open end of the glass tube. In the embodiment shown in fig. 2, the gas supply comprises a nozzle 605. The outlet 604 of the nozzle 605 is placed so that the gas F expelled from the outlet 604 of the nozzle 605 can enter the tube end 20 of the tube 10. Preferably, the nozzle 605 is lined up with the axial direction of the tube 10. The outlet 604 of the nozzle 605 is place at some distance from the tube end 20 to enable the gas F to freely enter the glass tube 10.

According to the invention as shown in fig. 3, the gas supply 701 comprises an outlet 704 that expels the gas F into a distribution chamber 707. This distribution chamber 707 is preferably made as a cylindrical chamber with an open end 709 at the end facing away from the outlet 704, with the outlet 704 placed in or near the center of the chamber 707 at the closed end of the chamber. The open end 709 of the distribution chamber 707 is placed near or around the end 20 of the glass tube 10, so that the gas F leaving the outlet 704 and being gathered into the distribution chamber 707 can enter the glass tube 10 freely. Around the open end 709 of the distribution chamber 707 a circumferential shield 708 can be placed. The shield 708 extends during the supply of gas F to the glass tube 10 around the end section 20 of the tube 10. The shield 708 creates a chamber that retains the gas F in a overpressure situation (compared to the ambient air pressure) so that the ambient air is prevented from entering the glass tube 10, or at least the amount of ambient air entering is reduced. The circumference of the shield 708 is preferably larger in diameter than the open end 709 of the distribution chamber 707. The shield 708 does not need to be contiguous around the circumference and can be provided with additional openings to change gas flow to improve the flow of the gas F so that it easily enters the glass tube 10.

The invention can also be implemented by adding an air supply according to the invention to an existing closing apparatus. In that case, the air supply should be added to the existing apparatus so that the air supply lines up with the end of the tube at the point where the end is going to be closed.

## Claims

1. Method for the manufacture of a glass tube with closed ends, comprising the steps of
Providing a glass tube (19) with open ends (20,30),
Closing a first open end (30) while introducing a gas (F) into the tube (10) through the second open end (20),
opening a ventilation hole (32) in a wall of the glass tube (10) near one of the open ends (20), and
closing the second open end (21).

2. Method according to claim 1, wherein the gas (F) introduced has a relative humidity of 5%-20%.

3. Method according to any of the preceding claims, wherein the gas (F) is introduced by means of a distribution chamber (707) located near the second open end.

4. Method according to claim 3, wherein the distribution chamber (707) is located axially with respect to the glass tube (10).

5. Method according to according to claim 3 or 4, wherein the distribution chamber (707) is formed by a gas exit and a three-sided open chamber enclosing at least part of the second open end.

6. Method according to according to claim 1 or 2, wherein the gas (F) is introduced by means of a nozzle (605) located near the second open end.

7. Method according to any of the preceding claims, wherein the gas (F) is air.

8. Apparatus for closing a glass tube comprising
a glass tube transport for transporting the glass tube,
a first close tool,
a ventilation hole tool,
a second close tool,
and an air supply, wherein the air supply is positioned opposite from the first close tool and comprises a distribution chamber (707), wherein the distribution chamber (707) is formed by a gas exit and a three-sided open chamber configured to enclose at least a part of the end of the glass tube.

## Patentansprüche

1. Verfahren zur Herstellung eines Glasrohrs mit geschlossenen Enden, umfassend die folgenden Schritte
Bereitstellen eines Glasrohrs (19) mit offenen Enden (20, 30),
Verschließen eines ersten offenen Endes (30), während ein Gas (F) durch das zweite offene Ende (20) in das Rohr (10) eingebracht wird,
Öffnen eines Entlüftungslochs (32) in einer Wand des Glasrohrs (10) nahe einem der offenen Enden (20), und
Verschließen des zweiten offenen Endes (21).

2. Verfahren nach Anspruch 1, wobei das eingebrachte Gas (F) eine relative Feuchtigkeit von 5 %-20 % aufweist.

3. Verfahren nach einem der vorhergehenden Ansprüche, wobei das Gas (F) mittels einer Verteilungskammer (707) eingebracht wird, die nahe dem zweiten offenen Ende angeordnet ist.

4. Verfahren nach Anspruch 3, wobei die Verteilungskammer (707) in Bezug auf das Glasrohr (10) axial angeordnet ist.

5. Verfahren nach Anspruch 3 oder 4, wobei die Verteilungskammer (707) durch einen Gasauslass und eine dreiseitige offene Kammer gebildet ist, die zumindest einen Teil des zweiten offenen Endes umschließt.

6. Verfahren nach Anspruch 1 oder 2, wobei das Gas (F) mittels einer Düse (605) eingebracht wird, die nahe dem zweiten offenen Ende angeordnet ist.

7. Verfahren nach einem der vorhergehenden Ansprüche, wobei das Gas (F) Luft ist.

8. Einrichtung zum Verschließen eines Glasrohrs, umfassend
einen Glasrohrtransport zum Transportieren des Glasrohrs,
ein erstes Schließwerkzeug,
ein Entlüftungslochwerkzeug,
ein zweites Schließwerkzeug,
und eine Luftzufuhr, wobei die Luftzufuhr gegenüber dem ersten Schließwerkzeug positioniert ist und eine Verteilungskammer (707) umfasst, wobei die Verteilungskammer (707) durch einen Gasauslass und eine dreiseitige offene Kammer gebildet ist, die so ausgelegt ist, dass sie zumindest einen Teil des Endes des Glasrohrs umschließt.

## Revendications

1. Procédé pour la fabrication d'un tube en verre à extrémités fermées, comprenant les étapes consistant à fournir un tube en verre (19) à extrémités ouvertes (20, 30),
fermer une première extrémité ouverte (30) en introduisant un gaz (F) dans le tube (10) par la seconde extrémité ouverte (20),
ouvrir un trou de ventilation (32) dans une paroi du tube en verre (10) à proximité de l'une des extrémités ouvertes (20), et
fermer la seconde extrémité ouverte (21).

2. Procédé selon la revendication 1, le gaz (F) introduit présentant une humidité relative de 5 % à 20 %.

3. Procédé selon l'une quelconque des revendications précédentes, le gaz (F) étant introduit par l'intermédiaire d'une chambre de distribution (707) située à proximité de la seconde extrémité ouverte.

4. Procédé selon la revendication 3, la chambre de distribution (707) étant située axialement par rapport au tube en verre (10).

5. Procédé selon la revendication 3 ou 4, la chambre de distribution (707) étant formée par une sortie de gaz et une chambre ouverte à trois côtés entourant au moins une partie de la seconde extrémité ouverte.

6. Procédé selon la revendication 1 ou 2, le gaz (F) étant introduit au moyen d'une buse (605) située à proximité de la seconde extrémité ouverte.

7. Procédé selon l'une quelconque des revendications précédentes, le gaz (F) étant de l'air.

8. Appareil pour fermer un tube en verre comprenant
un transport de tube en verre pour transporter le tube en verre,
un premier outil de fermeture,
un outil de trou de ventilation,
un second outil de fermeture,
une alimentation en air, l'alimentation en air étant positionnée à l'opposé du premier outil de fermeture et comprenant une chambre de distribution (707), la chambre de distribution (707) étant formée par une sortie de gaz et une chambre ouverte à trois côtés conçue pour entourer au moins une partie de l'extrémité du tube en verre.
